# EUROPEAN PATENT SPECIFICATION

(11) **EP 2 064 281 B1**
(45) Date of publication and mention of the grant of the patent: **09.02.2011**
(21) Application number: 07803451.9
(22) Date of filing: 13.09.2007
(51) Int. Cl.: C08J 9/00, C08J 9/06, C08J 9/10

(54) **SOLID EXPANDABLE COMPOSITIONS**
FESTE EXPANDIERBARE ZUSAMMENSETZUNGEN
COMPOSITIONS SOLIDES EXPANSIBLES

(30) Priority: 20.09.2006 US 846022 P
(43) Date of publication of application: 03.06.2009
(73) Proprietor: Henkel AG & Co. KGaA, 40589 Düsseldorf (DE); Cemedine Henkel Co., Ltd., Isogo-ku Yokohama, Kanagawa 235-0017 (JP)
(72) Inventor: DOBASHI, Masaaki, Nissinn-Shi, Aichi-Ken (JP)
(74) Representative: Kann, Wolfgang
(86) International application number: PCT/EP2007/059631
(87) International publication number: WO 2008/034755

(56) References cited:
- US-A- 6 150 428

## Description

### FIELD OF THE INVENTION

The invention relates to compositions useful for sealing off hollow cavities, such as those present in structural members of vehicle bodies. The compositions are solid at room temperature, but are capable of being expanded in volume by exposing the compositions to heat sufficient to activate a latent blowing agent contained in the composition.

### BACKGROUND OF THE RELATED ART

In recent years, foamable resins have been developed for the purpose of filling or sealing off hollow components of vehicles and the like and thereby muffle sound and prevent vibrations in such vehicles. For example, a part having a predetermined shape (sometimes referred to by workers in the art as an acoustic baffle or cavity filler insert) is fabricated using such a foamable resin and disposed in an automotive hollow pillar, with the foamable resin thereafter being expanded to fill or seal off the pillar.

The expandable resin formulations that have been developed for use in such applications are commonly referred to as pillar fillers. Many different types of pillar fillers are known in the art, as exemplified by the following United States patents and applications: 6,150,428; 5,708,042; 5,212,208; 5,631,304; 6,830,799; 6,281,260; 5,266,133; 5,373,027; 5,160,465; 5,385,951; and 2004-0266898.

While such parts containing pillar fillers are generally effective in suppressing noise and vibration transmission through the hollow components, it is desirable to reduce the weight of these parts both for cost reasons and also to reduce the overall weight of the vehicle (to improve fuel economy, for example). In order to reduce weight (and also to ensure complete filling or sealing of the cavity), it will generally be necessary to utilize foamable resin formulations capable of a high rate of expansion (thereby lowering the density of the foamed resin). Although this could be achieved by simply incorporating a higher level of blowing agent in the foamable resin formulation, in practice it has proven to be difficult to achieve a high degree of expansion (e.g., at least 1000% of the initial volume of the resin formulation). The gas evolved by decomposition of the blowing agent must be trapped within the resin matrix for expansion to occur. However, the ability of the resin matrix to effectively trap the evolved gas often is adversely affected as the resin is further heated and softened/melted.

Typically it will be desirable to formulate and use a foamable pillar filler such that it forms an expanded shape within a cavity of a vehicle body when it is conveyed through a conventional paint or primer bake oven. Conventional ovens for baking or curing a finish applied to a vehicle body typically are operated at temperatures in the range of about 140 degrees C to about 200 degrees C, depending upon the coating to be dried and cured. The vehicle body usually passes through such an oven within a time period of from as little as about 10 to 15 minutes to as much as 2 hours. For this reason, pillar fillers have generally been formulated to undergo expansion at temperatures of from about 135 degrees C to about 185 degrees C.

The primary objective of the paint and/or primer baking process in a vehicle assembly operation is to properly and efficiently cure the paint and/or primer coating that has been applied to the surface of the vehicle body. The residence time of a vehicle body in the paint and/or primer baking oven is carefully controlled to effect the required curing of the paint and/or the primer, in a minimum time. Due to the many different types of cavities and other hollow sections in a vehicle body, which may vary significantly in location, length, and relative distance from the surface of the vehicle body which is being treated with heat to bake the paint or primer, the actual temperatures experienced within particular cavities and hollow sections of the body during the paint and/or primer curing operation can vary considerably. Certain cavities and hollow sections may reach substantially higher temperatures than other cavities or hollow sections during the baking cycle.

The location of pillar filler parts within a vehicle body is generally determined by the need or desire to dampen or suppress noise and vibration being transmitted through particular portions of the body. The positioning of a pillar filler part thus typically does not take into account the temperature such location will experience during the baking or curing cycle relative to other locations. Due to variations in the mass of metal immediately adjacent to the pillar filler part, the proximity of the pillar filler part to the heat source, as well as the rate of flow of heated air in the vicinity of the pillar filler part, certain locations within the vehicle body may reach different maximum temperatures than other locations and/or remain at an elevated temperature for longer or shorter periods of time as compared to other locations. The heat history each of the pillar filler parts may experience therefore may be quite different, even when uniform baking oven temperatures and transit times are carefully maintained.

Formulation of suitable pillar filler products for use in acoustic baffle parts and the like thus requires that a number of diverse and functionally disparate parameters and conditions be satisfied. The pillar filler must be readily formable into a solid, dimensionally stable (at ambient temperatures) body of predetermined size and shape. Such body should be capable of undergoing a relatively rapid expansion from its original size upon heating to an elevated temperature, preferably, for the reasons mentioned previously, to a final volume that is many times the original volume of the body. At the same time, the body should not exhibit sagging or collapse in the process of or after having reached its maximum degree of expansion. Uniformity of expansion, wherein the body expands relatively uniformly in a controlled manner, is a highly desirable characteristic for pillar filler parts.

In view of the fact that different cavities in the vehicle body experience temperatures which differ from one cavity to another, the pillar filler must be capable of undergoing a high degree of expansion at even the lowest temperature likely to be experienced in a cavity in which an expandable part is positioned. Similarly, the pillar filler must not exhibit deterioration or degradation at the highest temperature that is likely to be experienced in one of the cavities during the vehicle paint and/or primer curing cycle. It would be highly desirable to be able to use a single pillar filler formulation for all of the expandable parts needed for a particular vehicle, regardless of the particular locations of these different parts.

It is additionally advantageous to employ a pillar filler that when expanded and brought into contact with a metal surface not only adheres strongly to such metal surface, but also creates an adhesive bond to the metal surface that is resistant to environmental conditions such as high humidity that may tend to cause corrosion of the metal surface. Corrosion of the metal surface can result in separation of the expandable material from the inner walls of the vehicle cavity in which it is deployed, thereby compromising the effectiveness of the cavity filler insert in suppressing noise and vibration within the cavity. Since a vehicle ordinarily is expected to remain in use for a number of years and to be exposed during that time to harsh weather conditions, the development of pillar fillers capable of maintaining a high level of effectiveness over such extended period of time would be a welcome advance in the field.

### BRIEF SUMMARY OF THE INVENTION

The present invention provides a solid expandable composition comprising at least one anhydride-functionalized thermoplastic, at least one amine-functionalized latent curing agent, and at least one latent blowing agent. Without wishing to be bound by theory, it is believed that the amine groups of the amine-functionalized latent curing agent react with the anhydride groups of the anhydride-functionalized thermoplastic, thereby inducing crosslinking of the polymer which assists in more effectively trapping the gas evolved from the blowing agent upon heating and making the resulting foam more resistant to overbaking than conventional pillar fillers. Additionally, the expanded material obtained by heating the solid expandable composition exhibits excellent adhesion to metal surfaces, as well as improved resistance to corrosion under high humidity conditions. The solid expandable composition can be formulated to provide an exceptionally high degree of expansion (e.g., 1200-2500%) while at the same time maintaining good uniformity in foam quality without significant sagging. Also provided is a method of blocking off a hollow cavity of a structural member, said method comprising positioning a portion of the solid expandable composition within said hollow cavity and heating said portion of the solid expandable composition to a temperature effective to activate said latent blowing agent, thereby causing the solid expandable composition to expand and block off said hollow cavity. The solid expandable composition may be used for such purpose by itself (e.g., in the form of a shaped body), or in combination with a carrier.

### DETAILED DESCRIPTION OF CERTAIN EMBODIMENTS OF THE INVENTION

As previously mentioned, the solid expandable compositions of the present invention contain one or more anhydride-functionalized thermoplastics, i.e., thermoplastic polymers bearing one or more anhydride functional groups per molecule. The anhydride functional groups may be introduced through use of an anhydride-containing monomer in the polymerization process to form the thermoplastic and/or functionalization of an already-formed thermoplastic polymer by reaction with an anhydride-functionalized reactant such as by grafting with an anhydride. Although such anhydride groups may be terminal (i.e., at the end of the polymer chain), in preferred embodiments the anhydride groups are statistically distributed along the polymer backbone.

For example, the anhydride-functionalized thermoplastic can be a polyethylene grafted with an unsaturated carboxylic acid anhydride or a copolymer of ethylene and an unsaturated carboxylic acid anhydride which is obtained, for example, by radical copolymerization.

The unsaturated carboxylic acid anhydride can be chosen, for example, from maleic anhydride, itaconic anhydride, citraconic anhydride, allylsuccinic anhydride, cyclohex-4-ene-1,2-dicarboxylic anhydride, 4-methyl-enecyclohex-4-ene-1,2-dicarboxylic anhydride, bicyclo[2.2.1]hept-5-ene-2,3-dicarboxylic anhydride and methylbicyclo[2.2.1]hept-5-ene-2,2-dicarboxylic anhydride. Maleic anhydride is advantageously used. It would not be departing from the scope of the invention to replace all or part of the anhydride with an unsaturated dicarboxylic acid which is then, following the grafting reaction or copolymerization, converted to the anhydride form (i.e., by ring closure in a dehydration reaction).

As regards the polyethylene onto which the unsaturated carboxylic acid anhydride is grafted, the term polyethylene is understood herein to mean both homo- and copolymers of ethylene.

Exemplary comonomers (monomers which could be copolymerized with ethylene) include:
alpha-olefins, particularly those having from 3 to 30 carbon atoms (e.g., propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene, 1-docosene, 1-tetracosene, 1-hexacosene, 1-octacosene and 1-triacontene; such alpha-olefins can be used alone or as a mixture of two or of more than two;
unsaturated carboxylic acid esters, such as, for example, alkyl(meth)acrylates, it being possible for the alkyl groups to have up to 24 carbon atoms; examples of alkyl acrylates or methacrylates are in particular methyl methacrylate, methyl acrylate, ethyl acrylate, n-butyl acrylate, isobutyl acrylate and 2-ethylhexyl acrylate;
unsaturated carboxylic acids, such as, for example, acrylic acid and methacrylic acid ;
vinyl esters of saturated carboxylic acids, such as, for example, vinyl acetate or propionate; and
dienes, such as, for example, 1,4-hexadiene, 1,4-butadiene, isoprene.

The polyethylene can comprise several of the above comonomers.

Mention may be made, as examples of polyethylenes, of:
low-density polyethylene (LDPE);
high-density polyethylene (HDPE);
linear low-density polyethylene (LLDPE);
very low-density polyethylene (VLDPE);
polyethylene obtained by metallocene catalysis;
ethylene/alkyl(meth)acrylate copolymers (such as ethylene/methyl acrylate and ethylene ethyl acrylate copolymers;
ethylene/(meth)acrylic acid copolymers;
ethylene/(meth)acrylic acid copolymers; and
ethylene/vinyl acetate copolymers.

The grafting of unsaturated anhydrides onto thermoplastic polymers is a procedure well known in the art. For example, grafting initiators such as peroxides may be employed, with the polymer, unsaturated anhydride and grafting initiator being fed into a heated extruder so as to induce the grafting reaction upon the melted polymer. As regards the copolymers of ethylene and an unsaturated carboxylic acid anhydride, that is to say those in which the unsaturated carboxylic acid anhydride is not grafted, these are copolymers of ethylene, an unsaturated carboxylic acid anhydride and optionally another monomer which can be chosen from the comonomers that were mentioned above in the case of the ethylene copolymers intended to be grafted. Examples of such copolymers include, but are not limited to, ethylene/maleic anhydride copolymers, ethylene/alkyl(meth)acrylate/maleic anhydride copolymers, ethylene/(meth)acrylic acid/maleic anhydride copolymers, and ethylene/vinyl acetate/maleic anhydride copolymers.

In certain embodiments of the invention, the MFI of the anhydride-functionalized thermoplastic is between about 2 and about 200 (in g/10 min at 190 degrees C/2.16 kg). The melting point of the anhydride-functionalized thermoplastic may, for example, be between about 40 and about 110 degrees C. The anhydride content of the anhydride-functionalized thermoplastic (as measured by the weight % of the anhydride monomer(s) used as a comonomer or grafting reactant in the preparation of the thermoplastic, based on the total weight of the anhydride-functionalized thermoplastic) is generally within the range of about 0.1 to about 10 weight percent.

In preferred embodiments of the present invention, the solid expandable composition contains at least about 30 weight percent or at least about 35 weight percent or at least about 40 weight percent or at least about 45 weight percent of one or more anhydride-functionalized thermoplastic polymers. Typically, the solid expandable composition is comprised of no greater than about 90 weight percent or no greater than about 85 weight percent or no greater than about 80 weight percent or no greater than about 75 weight percent, in total, of anhydride-functionalized thermoplastic polymer. Typically, the composition contains more anhydride-functionalized thermoplastic polymer than any other type of polymer.

The solid expandable compositions of the present invention include one or more amine-functionalized latent curing agents, which generally speaking may be described as compounds bearing one or more primary and/or secondary amine groups per molecule that are capable of reacting with the anhydride groups on the anhydride-functionalized polymer component. The curing agent should contain at least two active hydrogen atoms per molecule (e.g., at least one primary amine group or at least two secondary amine groups per molecule). Such curing agents may be monomeric, oligomeric, or polymeric in nature. Aromatic, aliphatic, heterocyclic, alicyclic, and aromatic/aliphatic amines, especially polyamines, may be employed. Preferably, the amine-functionalized latent curing agents used in the present invention have activation temperatures within the range of from about 100 to about 200 degrees C, preferably from about 105 to about 150 degrees C. In one embodiment of the invention, the amine-functionalized curing agent is in the form of a finely divided (powdered) solid at room temperature that is substantially inert towards the anhydride-functionalized thermoplastic at room temperature and the temperature at which the solid expandable composition is to be molded or formed into a desired shape (typically, temperatures up to about 100 degrees C) but which melts or dissolves in the solid expandable composition upon heating to a higher temperature (typically, the temperature to which the composition will be exposed in order to activate the latent blowing agent and initiate foaming of the composition). Such melting or dissolution is believed to render the amine-functionalized curing agent reactive towards the anhydride-functionalized thermoplastic. For example, an amine-functionalized curing agent may be selected having a melting point of from about 105 to about 150 degrees C. Encapsulated amine-functionalized curing agents may also be used, wherein small particles or droplets of the curing agent are encased by a protective shell of a solid material, such as a wax or the like, that melts or dissolves at the desired activation temperature. The amine value of the curing agent is not believed to be critical, but may, for example, be within the range of about 100 to about 400.

Although any of the latent (heat-activated) amine-functionalized curatives known in the art may be used in the present invention, it is preferred for at least one curing agent in the solid expandable composition to be an amine-epoxy adduct, provided such an adduct contains reactive primary and/or secondary amine groups. Amine-epoxy adducts are well-known in the art and are described, for example, in U.S. Pat. Nos. 3,756,984, 4,066,625, 4,268,656, 4,360,649, 4,542,202, 4,546,155, 5,134,239, 5,407,978, 5,543,486, 5,548,058, 5,430,112, 5,464,910, 5,439,977, 5,717,011, 5,733,954, 5,789,498, 5,798,399 and 5,801,218, each of which is incorporated herein by reference in its entirety. Such amine-epoxy adducts are the products of the reaction between one or more amine compounds and one or more epoxy compounds. Carboxylic acid anhydrides, carboxylic acids, phenolic novolac resins, water, metal salts and the like may also be utilized as additional reactants in the preparation of the amine-epoxy adduct or to further modify the adduct once the amine and epoxy have been reacted. While any type of amine could be used to prepare the amine-epoxy adduct, alicyclic and/or heterocyclic amines and/or amines containing at least one primary nitrogen atom are often preferred. Imidazoles, piperazines, piperidines, pyrazoles, purines, and triazoles can be utilized, for example. Any kind of epoxy compound can be employed as the other starting material for the adduct, including monofunctional, bifunctional, and polyfunctional epoxy compounds such as the substances commonly referred to in the art as epoxy resins (e.g., glycidyl ethers of polyphenols). Suitable amine-epoxy adducts are available from commercial sources such as Ajinomoto, Inc., Shell, Pacific Anchor Chemical Company, Fuji Chemical Industries and the Asahi Chemical Industry Company Limited. Amine-epoxy adducts sold by Fuji Chemical Industry Co., Ltd. under the trademark FUJICURE are especially preferred for use in the present invention.

Generally speaking, the amount of amine-functionalized curing agent is selected to be sufficient to cause the desired degree of reaction and crosslinking of the anhydride-functionalized thermoplastic. Such amount may typically be roughly proportionate to the anhydride group content of the anhydride-functionalized thermoplastic. For example, the equivalent ratio of amine-functionalized latent curing agent to anhydride-functionalized thermoplastic (i.e., the ratio of amine groups to anhydride groups) may be from about 5:1 to about 1:5 or from about 3:1 to about 1:3. In certain embodiments of the invention, the concentration of amine-functionalized curing agent may range from about 0.1 to about 5 weight %, for example.

The solid expandable composition may contain one or more ketimines and/or aldimines, which generate anhydride-reactive amine compounds when hydrolyzed. The concentration of such ketimine/aldimine species may, for example, be up to about 2 weight %, e.g., about 0.01 to about 1 weight %. These ketimines and aldimines may be synthesized by reacting polyamines containing two or more amine groups per molecule, such as aliphatic diamines, alicyclic diamines, aromatic diamines, aromatic/aliphatic diamines, and the like, with carbonyl compounds such as aldehydes or ketones, including aliphatic aldehydes, aromatic aldehydes, cyclic ketones, aliphatic ketones, and the like.

An activator may be used in combination with the amine-functionalized curing agent. Particularly suitable activators include phenolic compounds, which may also assist in improving the shelf life (particularly under humid conditions) and/or overbaking resistance of the solid expandable composition. The optional curing agent activator may, for example, typically be present at a concentration of from about 0.001 to about 0.5 weight percent.

All known latent blowing agents, such as "chemical blowing agents" which liberate gases by decomposition upon heating as well as "physical blowing agents", i.e., expanding hollow beads which expand in volume upon heating (also sometimes referred to as expandable microspheres), are suitable for use as blowing agents in the present invention. Mixtures of different blowing agents may be used to advantage; for example, a blowing agent having a relatively low activation temperature may be used in combination with a blowing agent having a relatively high activation temperature. Preferably, the blowing agents used in the present invention have activation temperatures of from about 100 to about 200 degrees C.

Examples of "chemical blowing agents" include azo, hydrazide, nitroso and carbazide compounds such as azobisisobutyronitrile, azodicarbonamide (ADCA), di-nitroso-pentamethylenetetramine, 4,4'-oxybis(benzenesulfonic acid hydrazide) (OBSH), azocyclohexyl nitrile, azodiaminobenzene, benzenesulfonyl hydrazide, calcium azide, 4,4'-diphenyldisulfonylazide, diphenyl-sulfone-3,3'-disulfohydrazide, benzene-1,3-disulfohydrazide, trihydrazinotriazine, p-toluene sulfonyl hydrazide and p-toluenesulfonyl semicarbazide. Mixtures of OBSH and ADCA are especially preferred for use in the present invention, with the weight ratio of OBSH:ADCA typically falling within the range of about 1:3 to about 2:1. "Chemical blowing agents" may advantageously be used in combination with additional activators or accelerators such as zinc compounds (e.g., zinc oxide, zinc stearate, zinc di-toluene sulfinate), magnesium oxide, titanium dioxide, carbon black, (modified) ureas and the like. Various acid/(bi)carbonate mixtures may also be utilized as the latent blowing agent. Bicarbonate salts such as sodium bicarbonate, sodiumhydrogen bicarbonate and the like, is also prefered as the blowing agents. However, "physical blowing agents" and particularly expandable hollow microspheres are also useable. Advantageously, the hollow microspheres are based on polyvinylidene chloride copolymers or acrylonitrile/ (meth)acrylate copolymers and contain encapsulated volatile substances such as light hydrocarbons or halogenated hydrocarbons.

Suitable expandable hollow microspheres are commercially available, e.g., under the trademark "Dualite" from Pierce & Stevens (now part of Henkel Corporation).

The amount of blowing agent is selected so as to provide the desired volume expansion of the solid expandable composition when heated to a temperature effective to activate the blowing agent. In preferred embodiments of the invention, the amount of blowing agent is sufficient to cause the solid expandable composition to expand at least about 1000% or at least about 1200% or at least about 1500% or at least about 2000% or at least about 2200%. Typically, the amount of blowing agent is from about 5 to about 20 weight % (all concentrations described herein, unless otherwise stated, are expressed in weight % based on the total weight of the solid expandable composition).

In addition to the anhydride-functionalized thermoplastic, the solid expandable composition of the present invention may also contain one or more epoxy-functionalized thermoplastics, i.e., thermoplastic polymers bearing one or more epoxide functional groups per molecule. Although such epoxide groups may be terminal (i.e., at the end of the polymer chain), in preferred embodiments the epoxide groups are statistically distributed along the polymer backbone. Epoxy-functionalized thermoplastics include copolymers of ethylene and one or more unsaturated epoxides, which can be obtained by copolymerization of ethylene and of unsaturated epoxide or by grafting the unsaturated epoxide onto the polyethylene. The grafting can be carried out in the solvent phase or onto the molten polyethylene in the presence of a peroxide. These grafting techniques are known per se. Regarding the copolymerization of ethylene and of an unsaturated epoxide, use may be made of the processes referred to as radical polymerization processes.

Examples of suitable unsaturated epoxides, include, but are not limited to:
aliphatic glycidyl esters and ethers, such as allyl glycidyl ether, vinyl glycidyl ether, glycidyl maleate, glycidyl itaconate and glycidyl (meth)acrylate ; and
alicyclic glycidyl esters and ethers, such as 2-cyclohexene-1-glycidyl ether, diglycidyl cyclohexene-4,5-carboxylate, glycidyl cyclohexene-4-carboxylate, glycidyl 5-norbomene-2-methyl-2-carboxylate and diglycidyl endo-cis-bicyclo[2.2.1]hept-5-ene-2,3-dicarboxylate.

When grafting techniques are employed, the copolymer is obtained from the grafting of a polyethylene homopolymer or copolymer as described previously in connection with the anhydride-functionalized thermoplastic, except that an epoxide is grafted onto the polymer instead of an anhydride. When copolymerization is used to prepare the epoxy-functionalized thermoplastic, this is also carried out in a manner generally similar to that used to obtain the anhydride-functionalized thermoplastic except that an unsaturated epoxide is used rather than an unsaturated anhydride. There may also be other comonomers, as in the case of the anhydride-functionalized thermoplastic.

Particularly preferred epoxy-functionalized thermoplastics include ethylene/alkyl(meth)acrylate/unsaturated epoxide copolymers. Such copolymers may advantageously contain up to 40% by weight of alkyl(meth)acrylate, preferably 1 to 40%, and up to about 15% by weight of unsaturated epoxide, preferably about 1 to about 12% by weight.

The epoxide is advantageously glycidyl (meth)acrylate. The alkyl(meth)acrylate is advantageously chosen from methyl (meth)acrylate, ethyl acrylate, n-butyl acrylate, isobutyl acrylate or 2-ethylhexyl acrylate or mixtures thereof. The amount of alkyl(meth)acrylate is advantageously from about 15 to about 35 weight %. The MFI is advantageously between about 2 and about 20 (in g/10 min at 190 degrees C/2.16 kg) and the melting point preferably is between about 40 and about 80 degrees C. This copolymer can be obtained by radical polymerization of the comonomers.

Although the presence of epoxy-functionalized thermoplastic is not necessary or critical, in certain embodiments of the invention the solid expandable composition may contain up to 35 weight % or even more of the epoxy-functionalized thermoplastic (e.g., from about 1 to 30 weight % epoxy-functionalized thermoplastic).

In addition to the anhydride-functionalized thermoplastic and the optional epoxy-functionalized thermoplastic, the compositions of the present invention may also contain one or more additional types of thermoplastic polymers (including thermoplastic elastomers). Suitable additional polymers include, but are not limited to, ethylene-methyl acrylate copolymers, ethylene-ethyl acrylate copolymers, polyolefins such as polypropylene and polyethylene (in particular, low-density polyethylene), ethylene-butyl acrylate copolymers, saponified ethylene-vinyl acetate copolymers, ethylene-vinyl acetate-unsaturated carboxylic acid copolymers, ethylene-vinyl acetate copolymers, ethylene-(meth)acrylic acid copolymers, styrene-butadiene block copolymers, styrene-isoprene block copolymers and the like. Other types of polymers and resins may also be used, such as, for example, phenol-formaldehyde resins (also known as novolacs and which are believed to help improve shelf life and heat resistance, including resistance of the expanded material towards degradation at elevated temperatures such as those encountered during baking of the vehicle body containing the solid expandable composition) and the like. Non-thermoplastic elastomers and rubbers could also be incorporated into the solid expandable composition. In certain embodiments of the invention, the total amount of such additional polymers is limited to no more than about 50 weight % or alternatively no more than about 20 weight %, e.g., about 0.1 to about 15 weight %.

In certain embodiments, the solid expandable composition is comprised of one or more free radical initiators. Such initiators include substances capable of inducing free radical reactions, in particular organic peroxides including ketone peroxides, diacyl peroxides, peresters, perketals, hydroperoxides and others such as cumene hydroperoxide, t-butyl peroxide, bis(tert-butylperoxy) diisopropylbenzene, di(tert-butyl peroxyisopropyl) benzene, 1,1-di-tert-butylperoxy-3,3,5-trimethylcyclohexane, dicumyl peroxide, t-butylperoxybenzoate, di-alkyl peroxydicarbonates, di-peroxyketals (such as 1,1-di-tert-butylperoxy-3,3,5-trimethylcyclohexane), ketone peroxides (e.g., methylethylketone peroxide), and 4,4- di-tert-butylperoxy n-butyl valerate. The free radical initiator is preferably a latent free radical initiator, that is, a free radical initiator that is essentially inert or non-reactive at room temperature but is activated by heating to an elevated temperature (for example, a temperature within the range of from about 130 degrees C to about 240 degrees C). Such free radical initiators are believed to assist in cross-linking the various polymeric components of the solid expandable compositions of the present invention, thereby improving and/or modifying the foaming, physical and/or mechanical characteristics of such compositions and the expanded foams obtained therefrom. The solid expandable composition may, for example, typically contain from about 0.1 to about 5 or about 0.5 to about 3 weight % free radical initiator.

In a particularly desirable embodiment (particularly in combination with one or more of the aforedescribed free radical initiators), the solid expandable composition contains a small amount (e.g., 0.1 to 5 weight percent or 0.5 to 4 weight percent) of one or more olefinically (ethylenically) unsaturated monomers and/or oligomers such as C₁ to C₆ alkyl (meth)acrylates (e.g., methyl acrylate), unsaturated carboxylic acids such as (meth)acrylic acid, unsaturated anhydrides such as maleic anhydride, (meth)acrylates of polyols and alkoxylated polyols such as glycerol triacrylate, ethylene glycol diacrylate, triethylene glycol diacrylate, trimethylolpropane triacrylate (TMPTA), trimethylolpropane trimethacrylate (TMPTMA), allyl compounds such as triallyl cyanurate and triallyl isocyanurate, triallyl trimesate, triallyl trimellitate (TATM), tetraallyl pyromellitate, the diallyl ester of 1,1,3,-trimethyl-5-carboxy-3-(4- carboxyphenyl)indene, dihydrodicyclo pentadienyl acrylate, trimethylolpropane trimellitate (TMPTM), pentaerythritol trimethacrylate, phenylene-dimaleimide, tri(2-acryloxyethyl)isocyanurate, tri(2-methacryloxyethyl)trimellitate, unsaturated nitriles such as (meth)acrylonitrile, vinyl compounds (including vinyl aromatic compounds such as styrene), and the like and combinations thereof. Preferably, the monomer(s) and/or oligomer(s) are selected to be capable of undergoing free radical reaction (e.g., oligomerization or polymerization) initiated by one or more free radical initiators present in the solid expandable composition when the solid expandable composition is heated to a temperature effective to activate the initiator (for example, by thermal decomposition of a peroxide).

The solid expandable composition may additionally be comprised of relatively minor amounts of one or more of the various additives known and conventionally used in the pillar filler art such as, for example, plasticizers, waxes, fillers, anti-oxidants and other stabilizers, tackifiers (tackifying resins), pigments, fire retardants and the like.

Suitable waxes include paraffinic waxes having melting ranges from 45 to 70°C, microcrystalline waxes with melting ranges from 60 to 95°C, synthetic Fischer-Tropsch waxes with melting points between 100 and 115°C as well as polyethylene waxes with melting points between 85 and 140°C. Fatty acids such as lauric acid, stearic acid, behenic acid, oleic acid and the like can also be used as process aids.

Suitable antioxidants and stabilizers include sterically hindered phenols and/or thioethers, sterically hindered aromatic amines and the like.

Examples of suitable fillers include talc, ground and precipitated chalks, clay, glass beads (including hollow glass microspheres), glass fibers, polymeric fibers, barium sulfate, calcium carbonate, mica, carbon black, calcium-magnesium carbonates, barite and silicate fillers of the aluminium-magnesium-calcium type, such as wollastonite and chlorite. Preferably, however, the total amount of filler is limited to less than 10% by weight.

In certain embodiments of the invention, the components of the solid expandable composition are selected such that the composition is free or substantially free of any thermosettable resin such as an epoxy resin (e.g., the expandable material contains less than 5 % or less than 1 % by weight epoxy resin, in particular epoxy resins that are glycidyl ethers of polyphenols such as bisphenol A).

The inventive solid expandable compositions may be prepared by mixing the selected components in any suitable apparatus, e.g., a dispersion mixer, planetary mixer, twin screw mixer or continuous mixer or extruder. Although it may be desirable to heat the components somewhat to assist in achieving a homogeneous, uniform mixture, care should be taken to avoid temperatures that cause premature activation of the latent blowing agent. Once the solid expandable composition has been prepared, it may be shaped by utilizing any expedient method such as blow molding, pelletization, injection molding, compression molding, die cutting, or extrusion.

Expansion of the solid expandable composition is achieved by a heating step, wherein the solid expandable composition is heated for a time and at a temperature effective to activate the blowing agent, amine-functionalized curing agent and also any free radical initiator that may be present.

Depending on the nature of the solid expandable composition and the line conditions at the assembly line, the heating step is typically carried out at a temperature from 130°C to 240°C, preferably from 150°C to 200°C, with a residence time in the oven from about 10 min. to about 30 min.

It is advantageous to take benefit of the heating step that follows the passage of the vehicle parts in the generally used electro coating bath (E-coat bath) to cause expansion of the solid expandable composition as the temperature during this heating step is generally sufficient to cause the expected expansion.

The solid expandable compositions of the present invention are adaptable and suitable for use in a wide variety of sealing and adhesive applications, including, in particular, as pillar fillers for blocking off hollow cavities within vehicle bodies. The solid expandable compositions thus are useful for fabricating cavity filler inserts, i.e., parts that are to be inserted into vehicle cavities and then activated by heating so as to foam and expand the solid expandable composition.

In one embodiment of the invention, the cavity filler insert is formed entirely from the solid expandable composition. For example, the solid expandable composition may be molded (e.g., by injection molding using a mold having the desired shape of the finished cavity filler insert) or otherwise shaped (e.g., by forming a flat sheet of the solid expandable composition and then cutting that sheet by die stamping or other suitable means) to provide the insert. In such embodiments, the attachment member(s) are an integral part of the insert (i.e., are comprised of the solid expandable composition) and may take the form of legs or the like that help to hold the insert in position within the structural member cavity by friction or pressure (e.g., where the legs are sufficiently resilient to permit them to be displaced slightly while inserting the insert and then spring back into position against the cavity walls upon release). Alternatively, the attachment member(s) may be in the form of engaging projections or the like that are capable of being inserted through openings in the cavity walls but are designed to resist being withdrawn through such openings (for example, by engagement of hooks or ridges on the projections with the exterior surface of the structural member wall in the vicinity of the opening), thereby securing the cavity filler insert in place. In one advantageous embodiment, the attachment members are comprised of solid expandable composition so that upon activation by heating the attachment member expands and helps to fill and seal off the opening in the cavity wall into which it has been inserted.

In another embodiment of the invention, the main body of the cavity filler insert is fabricated from the solid expandable composition but the attachment member(s) are comprised of a different material such as metal or non-expandable heat-resistant plastic or rubber. For example, the attachment member may include a pin that extends into the edge of the solid expandable composition body as well as a plastic compressible plug or the like that can be inserted through a cavity wall opening but that resists being withdrawn from the opening.

In preferred embodiments of the invention, however, the cavity filler insert comprises a carrier upon which the solid expandable composition is mounted, as such a design helps to make the most effective and efficient use of the solid expandable composition. For example, the amount of solid expandable composition needed to seal and dampen the hollow structural member may be minimized. Additionally, as will be described in more detail subsequently, the carrier may be configured so as to direct the expanding foam produced from the solid expandable composition towards the cavity walls and to prevent the expanding foam from sagging or distorting in a manner that interferes with complete sealing of the cavity. The amount of solid expandable composition that is present in the cavity filler insert is selected such that, after expansion, its volume occupies the clearance between the insert and the inner surface of the structural element and it is effective in sealing off the cavity and/or suppressing air-borne and/or structure-borne noise transmission within the hollow structural member to the desired degree.

The carrier is preferably comprised of a moldable material which is sufficiently resistant to cracking and breakage during normal usage, and has a melting or softening point that is higher than both the activation temperature of the solid expandable composition and the bake temperature that the structural members containing the cavity filler insert will be exposed to. Preferably, the moldable material is sufficiently resilient (non-brittle) and strong at ambient temperatures to withstand cracking or breaking while also being sufficiently heat resistant at elevated temperatures (e.g., the temperatures employed to foam the expandable material) to hold the expandable material in the desired position within the cavity of the structural member without significant warping, sagging or distortion. For example, the carrier may be formed of a moldable material that is somewhat pliable and resistant to breaking so that the assembled cavity filler insert can be subjected to bending forces at room temperature without being cracked or permanently deformed. The material that comprises the carrier is not particularly limited, and for example, may be any number of polymeric compositions that possess these qualities (e.g., polyesters, aromatic polyether, polyether ketones, and especially polyamides such as nylon 66). Polymeric compositions that are suitable for use as the carrier would be well known to those of ordinary skill in the art and include both thermoplastic and thermoset materials; and thus will not be described in detail herein. Unfoamed (solid) as well as foamed polymeric compositions may be utilized to fabricate the carrier. The moldable materials can, in addition to the polymeric compositions, also comprise various additives and fillers, such as colorants and/or reinforcing fibers (e.g. glass fibers), depending on the desired physical characteristics. Preferably, the moldable material has a melting or softening point (ASTM D789) of at least 200 degrees C, more preferably at least 225 degrees C, or most preferably at least 250 degrees C and/or has a heat deflection temperature at 18.6 kg (ASTM D648) of at least 180 degrees C, more preferably at least 200 degrees C, or most preferably at least 220 degrees C and/or a tensile strength (ASTM D638; 50% R.H.) of at least 1000 kg/cm², more preferably at least 1200 kg/cm², most preferably at least 1400 kg/cm² and/or a flexural modulus (ASTM D790; 50% R.H.) of at least 50,000 kg/cm², more preferably at least 60,000 kg/cm², most preferably at least 70,000 kg/cm². Alternatively, the carrier or one or more portions of the carrier may be fabricated from a metal such as steel or aluminum.

According to one embodiment, the cavity filler insert includes a carrier, a solid expandable composition in accordance with the present invention operably coupled with and supported by at least a portion of the carrier and extending at least around substantially the entire periphery of the cavity filler insert, and an attachment member for holding the cavity filler insert in the desired position within the cavity. The cavity filler insert may be substantially planar in shape. "Substantially planar" in the context of the present invention means that the cavity filler insert is relatively flat and thin and has a maximum thickness that is significantly less than the maximum width of the insert. For example, the maximum thickness of the insert is typically less than 20% of the insert's maximum width. Typically, the thickness of the solid expandable composition that is present at the periphery of the cavity filler insert is from about 4 to about 10 mm. In this context, "thickness" means the dimension of the cavity filler insert that is perpendicular to the plane of the insert and parallel to the longitudinal axis of the hollow structural member in which the insert is to be positioned.

The solid expandable composition preferably expands at least radially during activation in order to seal against the internal surfaces of the structural member to which the cavity filler insert is attached, and thus prevent undesirable noises and vibrations produced by the vehicle from being transmitted to the passenger compartment. The solid expandable composition may be formulated such that it comes into contact with, but does not adhere or bond to, the interior walls of the cavity when activated and expanded. Alternatively and preferably, the components of the solid expandable composition may be selected such that in its expanded state the solid expandable composition does securely adhere or bond to the interior cavity wall surfaces (i.e., cannot be separated from the wall surfaces without application of significant force). In highly preferred embodiments of the invention, the expanded material derived from the solid expandable composition is adhered sufficiently strongly to the cavity wall surfaces such that cohesive failure is observed (i.e., structural failure of the adhesive occurs such that adhesive remains on the surface of both the carrier and the cavity wall when the two items are separated). Preferably, the expanded material is a closed cell foam. It is also preferred that the expanded material be relatively low in density (e.g., less than 1200 kg/m³) so that the resulting dampened/sealed hollow structural member remains relatively low in weight, thereby providing vehicles with improved fuel economy.

The solid expandable composition may be assembled with the carrier by any of the known methods for manufacturing cavity filler inserts, including co-injection molding, side-by-side injection molding, overmolding and insert molding.

A cavity filler insert can include a carrier, one or more portions of the solid expandable composition supported on the carrier, and an attachment member which may be integrally molded with the carrier. The carrier may include a substantially flat and relatively rigid support plate that in one embodiment is not covered by the portion(s) of solid expandable composition. The carrier may include a structure (such as a groove or channel) that substantially surrounds the perimeter of the support plate, that is integrally molded therewith and that is configured to receive the solid expandable composition portion(s) prior to expansion.

The overall shape of the cavity filler insert is not particularly limited, but is typically configured so as to be similar in shape to, but somewhat smaller than, the vertical cross-section of the structural member cavity in which it is to be placed. Generally, it will be desirable for the outer edge of the cavity filler insert to substantially parallel the inner wall of the cavity so as to create a gap that is substantially uniform in width between the insert and the cavity wall (typically, this gap will be from about 1 to about 10 mm). This gap permits a liquid coating material such as a metal pretreament solution (e.g., a phosphate bath), primer, or paint to substantially coat the entire interior surface of the hollow structural member before the solid expandable composition is activated (i.e., foamed). Furthermore, the structure on the carrier that receives the solid expandable composition portion(s) is not particularly limited and may, for example, be in the form of an "L" shaped shelf or flange, a "V", "U", or "C" shaped groove or channel, brackets, tabs, clips or the like. The solid expandable composition may be positioned in a channel around the periphery of the carrier and the cavity filler insert fixed within a hollow structural member so as to create a gap between the solid expandable composition and the cavity walls. The channel may include a mounting surface that is substantially perpendicular to the plane of the carrier as well as side walls that are substantially parallel to the plane of the carrier. The solid expandable composition may also be secured to the carrier by means of holes around the perimeter of the carrier, wherein the solid expandable composition extends into or through such holes, or by means of a rim around the perimeter of the carrier and generally perpendicular to the plane of the carrier, wherein the expandable material surrounds such rim. The carrier may contain multiple types of structures that secure the solid expandable composition to the carrier. It will generally be preferred to employ a supporting structure that helps to direct the solid expandable composition as it is expanding towards the interior surface of the cavity that is being sealed, such as the aforementioned side walls. The solid expandable composition may be disposed as discrete and separate portions around the periphery of the carrier or may be in the form of a circumscribing and continuous band. The outer edge of the band of solid expandable composition may be slightly recessed from the outer edge of the carrier, or may be substantially flush with the outer edge of the support plate, or may extend out beyond the outer edge of the carrier.

Although the carrier in one embodiment of the present invention is in the form of a single plate, in other also suitable embodiments the carrier comprises a plurality of plates that are assembled such that at least a portion of the solid expandable composition is positioned between two of the plates. The plates thus may be substantially parallel to each other with a layer of solid expandable composition sandwiched in between the plates. The outer edge of the solid expandable composition layer may be slightly recessed from the outer edges of the plates, or may be substantially flush with the outer edges of the plates, or may extend out beyond the outer edges of the plates. In one embodiment, the solid expandable composition layer extends over essentially the entire surface of each of the plates. However, in another embodiment the solid expandable composition layer is present only around the outer edge of the cavity filler insert, with the interior of the cavity filler insert being free of solid expandable composition. In yet another embodiment, the cavity filler insert may comprise a first plate that is substantially flat and a second plate that has a raised substantially flat interior portion. The plates are fastened together such that the raised substantially flat interior portion of the second plate is brought into contact with the first plate to create a channel around the periphery of the two plates that is capable of receiving and supporting the solid expandable composition.

One or both of the plates may contain a plurality of openings into which and/or through which the expandable material may extend (either before and after activation and expansion or only after activation and expansion). The cavity filler insert may thus, for example, be in the form of a lattice. In preferred embodiments, any through holes which are initially present in the cavity filler insert are filled or closed after activation of the solid expandable composition.

When the cavity filler insert is to be attached to a wall of a structural member, a portion of the attachment member may be inserted into an opening of the wall that is sized to substantially match the attachment member portion that is being inserted. The shape of the opening is not particularly critical and may, for example, be square, circular, rectangular, polygonal, oval, or irregular, provided it is capable of receiving the attachment member and interacting with the attachment member so as to hold the cavity filler insert in the desired position.

In preferred embodiments of the invention, a portion of the solid expandable composition is positioned near the opening in the structural member wall so that upon activation of the solid expandable composition the solid expandable composition expands to completely block the opening. For example, the attachment member may extend out from the cavity filler insert through a portion of the solid expandable composition. Upon activation, the expanded material may extend through the opening and at least partially encase the attachment member, thereby helping to provide a secure, permanent fixing of the cavity filler insert within the cavity.

Other carrier and attachment member designs known in the art can be readily adapted for use in the present invention, including the designs described in the following patents and applications, each of which is incorporated herein by reference in its entirety: U.S. Pat. Nos. 5,766,719; 6,491,336; 6,887,060; 6,146,565; 5,631,027; 5,642,914; 6,413,611; 6,988,585; 6,347,799; 4,810,548; 5,089,311; 5,506,025; 5,806,915; 5,931,474; 5,979,902; 6,062,624; 6,114,004; 6,382,635; 6,103,341; 5,800,896; 5,678,826; 5,649,400; 5,642,914; 5,806,915; 6,347,799; 6,649,243; and 6,491,336; U.S. Published Application Nos. 2005-0082111; 2006-0041227; 2005-0279567; 2004-0201258; 2005-0166500; 2005-0087899; 2004-0239148; and 2005-072116.

The cavity filler insert can be used in products having hollow structural members other than vehicles, including, without limitation, aircraft, domestic appliances, furniture, buildings, walls and partitions, and marine applications (boats).

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

### EXAMPLES

A series of solid expandable compositions in accordance with the present invention was prepared using the components shown in Table 1. Each of the example compositions also contained 4.1 weight % talc, 0.5 weight % zinc di-toluene sulfinate, 2.0 weight % TMPTMA, 1.3 weight % 1,3-bis-(t-butylperoxy-isopropyl)-benzene (powdered with CaCO₃; PERKADOX 14-40 B-pd), 6.3 weight % powdered polyethylene (ICORENE MP650-35, ICO Polymers, Inc.), and 0.1 weight % antioxidant.

**Table 1.**

| Component | Example 1 | Example 2 | Example 3 |
|---|---|---|---|
| Ethylene/Vinyl Acetate/Maleic Anhydride Terpolymer¹ | 50.0 | 24.6 | 49.5 |
| Ethylene/Ethyl Acrylate/Maleic Anhydride Terpolymer² | 20.0 | 44.2 | - |
| Ethylene/Methyl Acrylate/Glycidyl Methacrylate Terpolymer³ | - | - | 19.8 |
| Amine Curing Agent⁴ | 0.6 | 1.2 | 0.6 |
| Ketimine⁵ | 0.2 | - | - |
| Low Density Polyethylene⁶ | 5.0 | - | - |
| Phenol-Formaldehyde Resin⁷ | - | 0.3 | 0.3 |
| OBSH⁸ | 3.4 | 6.0 | 6.1 |
| ADCA⁹ | 6.6 | 9.5 | 9.5 |

| | | | |
|---|---|---|---|
| ¹OREVAC T9318 (melt flow index = 7 g/10 min, measured by ASTM D1238; 85 degree C melting point, determined by DSC; Vicat point = 60 degrees C, measured by ASTM D1525; 38 Shore D hardness, measured by ISO 868; supplied by Arkema) ²BONDINE HX8290 (believed to contain about 11-13 weight % ethyl acrylate and about 2 weight % maleic anhydride; melt flow index = 65 g/10 min; 43 degrees C melting point; supplied by Arkema) ³LOTADER AX8900 (8 weight % glycidyl methacrylate, 24 weight % methyl acrylate; melt flow index = 6 g/10 min, measured at 190 degrees C, 2.16 Kg using ASTM D1238; 60 degrees C melting point, measured by DSC; Vicat point = <40 degrees C, measured by ASTM D1525-82; 18 Shore D hardness, measured by ISO 868; supplied by Arkema) ⁴FUJICURE FXR-1090FA epoxy-amine adduct (Fuji Chemical Industry Co., Ltd.) ⁵EPICURE H3 (Japan Epoxy Resins Co., Ltd.) ⁶PETROSEN 353 (melting point 100 degrees C; MFR = 150/10min; Tosoh Co., Ltd.) ⁷SUMILITE PR-311 (mixture of CAS No. 9003-35-4/CAS No. 100-97-0/CAS No. 108-95-2; Sumitomo Bakelite Co., Ltd.) ⁸NEOCELBORN #5000 p,p'-oxybis(benzenesulfonyl)hydrazide (Eiwa Chemical Ind. Co., Ltd.) ⁹VINIHOLE AC#3 azodicarbonamide (Eiwa Chemical Ind. Co., Ltd.) | | | |

The above-described solid expandable compositions were found to have the properties set forth in Table 2.

**Table 2.**

| Property | Example 1 | Example 2 | Example 3 | Comparative⁵ |
|---|---|---|---|---|
| Specific Gravity (before expansion) | 1.05 | 1.02 | 1.05 | 1.06 |
| Expansion Rate, %¹ | 2090 | 1480 | 1600 | 400 |
| Elongation Baked, %¹ | 160 | 180 | 203 | 150 |
| Tensile Strength Baked, MPa¹ | 0.3 | 0.4 | 0.4 | 0.4 |
| Lap-Shear Strength, MPa¹ | 0.1 | 0.2 | 0.1 | 0.2 |
| Expansion at Overbake, %² | 2200 | 1410 | 1980 | 300 |
| Lap-Shear Strength after 1 Week, MPa³ | 0.1 | 0.2 | 0.2 | <0.1 |
| Lap-Shear Strength after 4 Weeks, MPa⁴ | 0.09 | 0.20 | 0.16 | 0.02 |
| Expansion Rate after 4 Week Humidity Exposure, %⁴ | 1970 | 700 | 2260 | 400 |

| | | | | |
|---|---|---|---|---|
| ¹initial (no aging); 180 degrees C for 20 minutes; SPCC without oil ²200 degrees C for 40 minutes ³aged 1 week in humidity; 180 degrees C for 20 minutes; SPCC without oil ⁴aged 4 weeks in humidity; 180 degrees C for 20 minutes; SPCC without oil ⁵conventional pillar filler, without anhydride-functionalized thermoplastic | | | | |

The data in Table 2 clearly demonstrate that the solid expandable compositions of the present invention (Examples 1-3) exhibited superior overbake performance, while providing a much higher extent of expansion, as compared to a commercial product that does not contain either an anhydride-functionalized thermoplastic or an amine-functionalized curing agent. The compositions of the present invention also had good resistance to corrosive conditions (i.e., after prolonged exposure to high humidity, the expanded material obtained from the solid expandable composition retained high adhesive bond strength to SPCC).

## Claims

1. A solid expandable composition comprising:
a) at least one anhydride-functionalized thermoplastic;
b) at least one amine-functionalized latent curing agent; and
c) at least one latent blowing agent.

2. The solid expandable composition of claim 1, additionally comprising at least one epoxy-functionalized thermoplastic.

3. The solid expandable composition of at least one of claims I and 2, comprising at least one copolymer comprised of ethylene, maleic anhydride, and at least one monomer selected from the group consisting of vinyl acetate, acrylic acid, methacrylic acid, and C1 to C6 alkyl esters of acrylic acid and methacrylic acid.

4. The solid expandable composition of at least one of claims 1 to 3, additionally comprising at least one ketimine.

5. The solid expandable composition of at least one of claims 1 to 4, additionally comprising at least one ethylenically unsaturated crosslinking agent.

6. The solid expandable composition of at least one of claims 1 to 5, comprising at least one amine-functionalized latent curing agent selected from the group consisting of amine-epoxy adducts.

7. The solid expandable composition of at least one of claims 1 to 6, comprising at least one amine-functionalized latent curing agent in finely divided form having a melting point of from 105 to 150 degrees C.

8. The solid expandable composition of at least one of claims 1 to 7, comprising at least one latent blowing agent selected from the group consisting of azo compounds and hydrazide compounds.

9. The solid expandable composition of at least one of claims 1 to 8, wherein said solid expandable composition is comprised of from 35 to 80 weight percent of one or more anhydride-functionalized thermoplastics.

10. The solid expandable composition of at least one of claims 1 to 9, wherein said solid expandable composition is comprised of from 0.1 to 5 weight percent of one or more amine-functionalized curing agents.

11. The solid expandable composition of at least one of claims 1 to 10, wherein said solid expandable composition is comprised of from 5 to 20 weight percent of one or more latent blowing agents.

12. The solid expandable composition of at least one of claims 1 to 11, additionally comprising at least one phenolic compound and/or at least one phenol-formaldehyde resin.

13. A solid expandable composition of at least one of claims 1 to 12, comprising:
a) from 35 to 80 weight percent of one or more anhydride-functionalized thermoplastics produced by free radical copolymerization or grafting and selected from the group consisting of copolymers of ethylene, maleic anhydride, and one or more comonomers selected from the group consisting of vinyl acetate, acrylic acid, methacrylic acid, and C1 to C6 alkyl esters of acrylic acid and methacrylic acid;
b) from 0.1 to 5 weight percent of one or more amine-epoxy adducts having a melting point of from 105 to 150 degrees C; and
c) from 5 to 20 weight percent of one or more latent chemical blowing agents selected from the group consisting of azo compounds and hydrazide compounds.

14. A method of blocking off a hollow cavity of a structural member, said method comprising:
a) positioning a portion of the solid expandable composition of at least one of claims 1 to 13 within said hollow cavity, preferably in combination with a carrier; and
b) heating said portion of the solid expandable composition to a temperature effective to activate said latent blowing agent, thereby causing the solid expandable composition to expand and block off said hollow cavity.

15. A cavity filler insert comprising a carrier in combination with a portion of the solid expandable composition of at least one of claims 1 to 13.

## Patentansprüche

1. Feste, ausdehnbare Zusammensetzung, die Folgendes umfasst:
a) mindestens einen anhydridfunktionalisierten thermoplastischen Kunststoff;
b) mindestens einen aminfunktionalisierten latenten Härter und
c) mindestens ein latentes Treibmittel.

2. Feste, ausdehnbare Zusammensetzung nach Anspruch 1, die zusätzlich mindestens einen epoxyfunktionalisierten thermoplastischen Kunststoff umfasst.

3. Feste, ausdehnbare Zusammensetzung nach mindestens einem der Ansprüche 1 und 2, die mindestens ein Copolymer umfasst, das aus Ethylen, Maleinsäureanhydrid und mindestens einem Monomer besteht, das aus der Gruppe bestehend aus Vinylacetat, Acrylsäure, Methacrylsäure und C1- bis C6-Alkylestern von Acrylsäure und Methacrylsäure ausgewählt ist.

4. Feste, ausdehnbare Zusammensetzung nach mindestens einem der Ansprüche 1 bis 3, die zusätzlich mindestens ein Ketimin umfasst.

5. Feste, ausdehnbare Zusammensetzung nach mindestens einem der Ansprüche 1 bis 4, die zusätzlich mindestens einen ethylenisch ungesättigten Vernetzer umfasst.

6. Feste, ausdehnbare Zusammensetzung nach mindestens einem der Ansprüche 1 bis 5, die mindestens einen aminfunktionalisierten latenten Härter umfasst, der aus der Gruppe bestehend aus Amin-Epoxy-Addukten ausgewählt ist.

7. Feste, ausdehnbare Zusammensetzung nach mindestens einem der Ansprüche 1 bis 6, die mindestens einen aminfunktionalisierten latenten Härter in feinverteilter Form mit einem Schmelzpunkt von 105 bis 150 °C umfasst.

8. Feste, ausdehnbare Zusammensetzung nach mindestens einem der Ansprüche 1 bis 7, die mindestens ein latentes Treibmittel umfasst, das aus der Gruppe bestehend aus Azoverbindungen und Hydrazidverbindungen ausgewählt ist.

9. Feste, ausdehnbare Zusammensetzung nach mindestens einem der Ansprüche 1 bis 8, wobei die feste, ausdehnbare Zusammensetzung 35 bis 80 Gewichtsprozent eines oder mehrerer anhydridfunktionalisierter thermoplastischer Kunststoffe umfasst.

10. Feste, ausdehnbare Zusammensetzung nach mindestens einem der Ansprüche 1 bis 9, wobei die feste, ausdehnbare Zusammensetzung 0,1 bis 5 Gewichtsprozent eines oder mehrerer aminfunktionalisierter Härter umfasst.

11. Feste, ausdehnbare Zusammensetzung nach mindestens einem oder mehreren der Ansprüche 1 bis 10, wobei die feste, ausdehnbare Zusammensetzung 5 bis 20 Gewichtsprozent eines oder mehrerer latenter Treibmittel umfasst.

12. Feste, ausdehnbare Zusammensetzung nach mindestens einem der Ansprüche 1 bis 11, die zusätzlich mindestens eine phenolische Verbindung und/oder mindestens ein Phenolformaldehydharz umfasst.

13. Feste, ausdehnbare Zusammensetzung nach mindestens einem der Ansprüche 1 bis 12, die Folgendes umfasst:
a) von 35 bis 80 Gewichtsprozent eines oder mehrerer anhydridfunktionalisierter thermoplastischer Kunststoffe, der bzw. die mittels Radikalpolymerisation oder Pfropfen hergestellt wurde bzw. wurden und aus der Gruppe bestehend aus Copolymeren von Ethylen, Maleinsäureanhydrid und einem oder mehreren Comonomeren ausgewählt ist bzw. sind, das bzw. die aus der Gruppe bestehend aus Vinylacetat, Acrylsäure, Methacrylsäure und C1- bis C6-Alkylestern von Acrylsäure und Methacrylsäure ausgewählt ist bzw. sind;
b) von 0,1 bis 5 Gewichtsprozent eines oder mehrerer Amin-Epoxy-Addukte mit einem Schmelzpunkt von 105 bis 150 °C und
c) von 5 bis 20 Gewichtsprozent eines oder mehrerer latenter chemischer Treibmittel, das bzw. die aus der Gruppe bestehend aus Azoverbindungen und Hydrazidverbindungen ausgewählt ist bzw. sind.

14. Verfahren zur Blockierung eines Hohlraums eines Strukturelements, wobei das Verfahren Folgendes umfasst:
a) Anordnen eines Teils der festen, ausdehnbaren Zusammensetzung nach mindestens einem der Ansprüche 1 bis 13 in dem Hohlraum, vorzugsweise in Kombination mit einem Träger; und
b) Erhitzen des Teils der festen, ausdehnbaren Zusammensetzung auf eine Temperatur, die dazu wirksam ist, das latente Treibmittel zu aktivieren, wodurch bewirkt wird, dass die feste, ausdehnbare Zusammensetzung sich ausdehnt und den Hohlraum blockiert.

15. Hohlraumfülleinsatz, der einen Träger in Kombination mit einem Teil der festen, ausdehnbaren Zusammensetzung nach mindestens einem der Ansprüche 1 bis 13 umfasst.

## Revendications

1. Composition solide expansible comprenant :
a) au moins une matière thermoplastique à fonctionnalité anhydride ;
b) au moins un agent de durcissement latent à fonctionnalité amine ; et
c) au moins un agent gonflant latent.

2. Composition solide expansible selon la revendication 1, comprenant en outre au moins une matière thermoplastique à fonctionnalité époxy.

3. Composition solide expansible selon au moins une des revendications 1 et 2, comprenant au moins un copolymère comprenant de l'éthylène, de l'anhydride maléique, et au moins un monomère choisi parmi le groupe constitué par l'acétate de vinyle, l'acide acrylique, l'acide méthacrylique, et des esters alkyliques en C₁-C₆ de l'acide acrylique et de l'acide méthacrylique.

4. Composition solide expansible selon au moins une des revendications 1 à 3, comprenant en outre au moins une cétimine.

5. Composition solide expansible selon au moins une des revendications 1 à 4, comprenant en outre au moins un agent de réticulation à insaturation éthylénique.

6. Composition solide expansible selon au moins une des revendications 1 à 5, comprenant au moins un agent de durcissement latent à fonctionnalité amine choisie parmi le groupe constitué par des adduits d'amine-époxy.

7. Composition solide expansible selon au moins une des revendications 1 à 6, comprenant au moins un agent de durcissement latent à fonctionnalité amine sous une forme finement divisée, possédant un point de fusion de 105 à 150 °C.

8. Composition solide expansible selon au moins une des revendications 1 à 7, comprenant au moins un agent gonflant latent choisi parmi le groupe constitué par des composés azoïques et des composés d'hydrazide.

9. Composition solide expansible selon au moins une des revendications 1 à 8, dans laquelle ladite composition solide expansible comprend, à concurrence de 35 à 80 % en poids, une ou plusieurs matières thermoplastiques à fonctionnalité anhydride.

10. Composition solide expansible selon au moins une des revendications 1 à 9, dans laquelle ladite composition solide expansible comprend, à concurrence de 0,1 à 5 % en poids, un ou plusieurs agents de durcissement à fonctionnalité amine.

11. Composition solide expansible selon au moins une des revendications 1 à 10, dans laquelle ladite composition solide expansible comprend, à concurrence de 5 à 20 % en poids, un ou plusieurs agents gonflant latents.

12. Composition solide expansible selon au moins une des revendications 1 à 11, comprenant en outre au moins un composé phénolique et/ou au moins une résine de phénol-formaldéhyde.

13. Composition solide expansible selon au moins une des revendications 1 à 12, comprenant :
a) à concurrence de 35 à 80 % en poids, une ou plusieurs matières thermoplastiques à fonctionnalité anhydride que l'on obtient par copolymérisation radicalaire ou par greffage, et choisies parmi le groupe constitué par des copolymères d'éthylène, d'anhydride maléique, et un ou plusieurs comonomères choisis parmi le groupe constitué par l'acétate de vinyle, l'acide acrylique, l'acide méthacrylique, et des esters alkyliques en C₁-C₆ de l'acide acrylique et de l'acide méthacrylique ;
b) à concurrence de 0,1 à 5 % en poids, un ou plusieurs adduits d'amine-époxy possédant un point de fusion de 105 à 150°C ; et
c) à concurrence de 5 à 20 % en poids, un ou plusieurs agents gonflant chimiques latents choisis parmi le groupe constitué par des composés azoïques et des composés d'hydrazide.

14. Procédé d'obturation d'une cavité creuse d'un membre structurel, ledit procédé comprenant :
a) le placement d'une portion de la composition solide expansible selon au moins une des revendications 1 à 13 au sein de ladite cavité creuse, de préférence en combinaison avec un support ; et
b) le chauffage de ladite portion de la composition solide expansible jusqu'à une température efficace pour activer ledit agent gonflant latent, pour ainsi obtenir une expansion de la composition solide expansible et une obturation de ladite cavité creuse.

15. Insert pour le remplissage d'une cavité comprenant un support en combinaison avec une portion de la composition solide expansible selon au moins une des revendications 1 à 13.
